# FASCICULE DE BREVET EUROPEEN

(11) **EP 1 357 629 B1**
(45) Date de publication et mention de la délivrance du brevet: **14.09.2016**
(21) Numéro de dépôt: 03290969.9
(22) Date de dépôt: 18.04.2003
(51) Int. Cl.: H01M 10/625, H01M 10/643, H01M 10/6566, H01M 10/613, H01M 2/10

(54) **Générateur électrochimique à surface de révolution**
Elektrochemicher Generator mit Rotationsfläche
Electrochemical generator with surface of revolution

(30) Priorité: 23.04.2002 FR 0205090
(43) Date de publication de la demande: 29.10.2003
(73) Titulaire: Arts Energy, 16440 Nersac (FR)
(72) Inventeur: Vigier, Nicolas, 16700 Ruffec (FR); Besse, Stéphane, 16600 Touvre (FR)
(74) Mandataire: Hirsch & Associés

(56) Documents cités:
- EP-A- 1 035 599
- FR-A- 2 745 422
- US-A- 5 721 064
- PATENT ABSTRACTS OF JAPAN vol. 007, no. 284 (E-217), 17 décembre 1983 (1983-12-17) & JP 58 161272 A (MITSUBISHI DENKI KK), 24 septembre 1983 (1983-09-24)
- PATENT ABSTRACTS OF JAPAN vol. 2000, no. 24, 11 mai 2001 (2001-05-11) & JP 2001 185240 A (HONDA MOTOR CO LTD), 6 juillet 2001 (2001-07-06)

## Description

L'invention concerne le domaine des générateurs électriques, et plus particulièrement celui des générateurs électrochimiques secondaires, plus connus sous le nom de batteries rechargeables.

Dans certains domaines, tels que l'automobile, l'alimentation électrique de certains appareils est au moins en partie assurée par des batteries rechargeables constituées d'éléments électrochimiques dont le nombre et le mode d'assemblage sont fonction des caractéristiques électriques requises. L'espace réservé à la batterie au sein d'une installation ou d'un véhicule et les caractéristiques électriques variant d'une configuration à l'autre, il est généralement nécessaire de concevoir une architecture de batterie spécifique pour chaque configuration, ce qui contribue, notamment, à augmenter les coûts de fabrication et les temps de conception des batteries.

Pour tenter de remédier à cet inconvénient, il a été proposé des blocs-batteries de forme parallélépipédique (ou prismatique) dans lesquels les éléments sont regroupés, par exemple par trois, pour former des « bâtons » dont le nombre varie selon les besoins, ces blocs étant ensuite assemblés dans des boîtiers de forme cylindrique pour canaliser le flux d'air. Mais, cette solution n'est pas satisfaisante dans la mesure où, d'une part, elle ne permet pas d'optimiser le rapport entre le volume de la batterie et le nombre d'éléments requis, et d'autre part, elle ne permet pas une régulation de température suffisamment homogène des différents éléments. De plus, le type de ventilation imposé par l'architecture batterie se trouve limité en termes de performances et de niveau de bruit.

L'invention a donc pour but de remédier à tout ou partie des inconvénients précités.

Elle propose à cet effet un générateur électrochimique comprenant un boîtier qui comporte au moins une ouverture d'alimentation en air et une ouverture d'évacuation d'air, et loge dans une partie centrale des moyens de ventilation et, à la périphérie de la partie centrale, des éléments électrochimiques secondaires (par exemple des accumulateurs nickel / métal-hydrure (Ni/MH)), agencés de manière à délivrer des caractéristiques électriques choisies. De la sorte, on obtient une batterie compacte dont le rapport volume occupé / nombre d'éléments requis peut être optimisé en fonction des besoins et dont la régulation thermique des éléments peut être contrôlée efficacement par le flux d'air généré par les moyens de ventilation axiaux entre les ouvertures d'alimentation et d'évacuation.

Selon une autre caractéristique de l'invention, le boîtier présente une surface de révolution autour d'un axe de révolution, et les moyens de ventilation sont logés dans la partie centrale du boîtier, sensiblement suivant l'axe de révolution (X), ou au voisinage de celui-ci. On entend ici par « surface de révolution », la surface définie par les parois du boîtier autour de l'axe X.

Préférentiellement, le boîtier présente une forme sensiblement cylindrique circulaire.

Egalement de préférence, les éléments présentent une forme sensiblement cylindrique circulaire.

Selon une autre caractéristique de l'invention, le boîtier comporter plusieurs (au moins deux) compartiments en partie annulaire, de préférence amovibles, délimités par des parois latérales dont l'une au moins comprend des ouvertures permettant l'accès du flux dans la partie centrale, et dans lesquels sont placés les éléments. Selon les besoins, les éléments d'un compartiment peuvent être couplés en série aux éléments du compartiment voisin, ou l'on peut définir des branches d'au moins trois compartiments montés en série, lesdites branches pouvant être montées en série ou en parallèle.

Afin de faciliter l'assemblage de la batterie, le boîtier comprend de préférence deux coques propres à être assemblées pour loger et protéger les éléments et moyens de ventilation, et comprenant respectivement les ouvertures d'alimentation et d'évacuation.

Par ailleurs, les moyens de ventilation sont préférentiellement choisis dans un groupe comprenant les turbines et les ventilateurs axiaux.

Le générateur selon l'invention est tout particulièrement adapté, bien que de façon non exclusive, aux véhicules automobiles, et notamment à l'emplacement anciennement occupé par la roue de secours.

D'autres caractéristiques et avantages de l'invention apparaîtront à l'examen de la description détaillée ci-après, et des dessins annexés, sur lesquels :
- la figure 1 illustre un générateur électrochimique selon l'invention,
- la figure 2 est une vue en coupe selon l'axe II-II de la figure 1,
- la figure 3 est une vue en perspective éclatée du générateur de la figure 1.

Les dessins annexés sont, pour l'essentiel, de caractère certain. En conséquence, ils pourront non seulement servir à compléter l'invention, mais aussi contribuer à sa définition, le cas échéant.

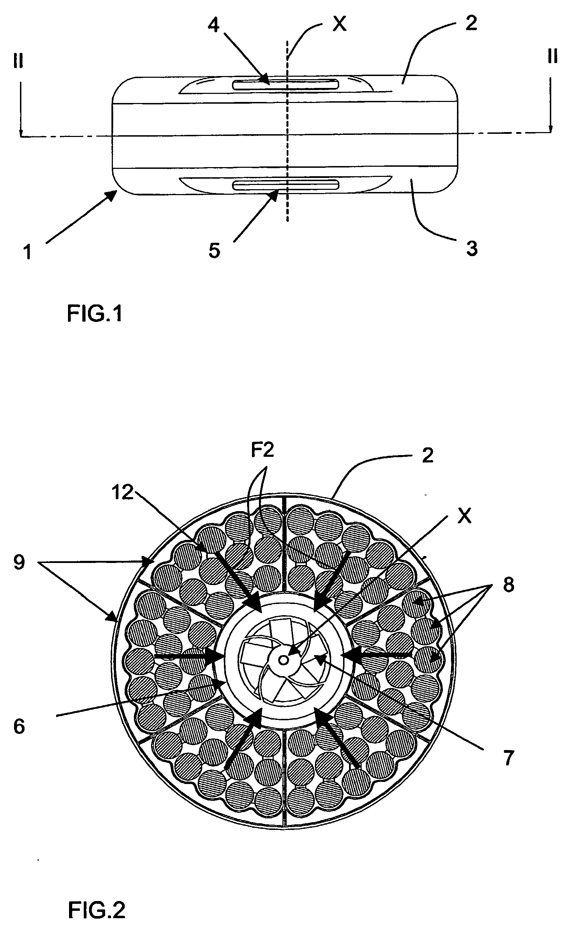

Le générateur électrochimique secondaire, ou batterie rechargeable, illustré sur les figures 1 à 3 comprend tout d'abord un boîtier 1 dont les parois définissent, de préférence, sensiblement une surface de révolution autour d'un axe de révolution X. Plus précisément, dans cet exemple de réalisation le boîtier 1 présente une forme sensiblement cylindrique circulaire, ledit axe de révolution X étant l'axe du cylindre.

Le boîtier 1 est ici réalisé sous la forme de deux réceptacles complémentaires ou coques 2 et 3.

La coque « supérieure » 2 comprend au moins une ouverture d'alimentation en air 4, de préférence réalisée dans une région périphérique. De même, la coque « inférieure » 3 comprend au moins une ouverture d'évacuation d'air 5, de préférence réalisée dans une région périphérique.

Les mots « supérieur » et « inférieur » sont ici utilisés pour faciliter la description de la batterie. Ils ne font que qualifier les positions respectives des coques 2 et 3 sur les figures, et non leurs positions une fois implantées dans une installation ou dans un véhicule automobile, par exemple.

Le boîtier 1 comprend une partie centrale 6 dans laquelle sont installés, sensiblement suivant l'axe X ou au voisinage de celui-ci, des moyens de ventilation 7 destinés à réguler, par un flux d'air, l'aérothermie d'éléments électrochimiques 8 décrits ci-après. De préférence, ces moyens de ventilation 7 sont réalisés sous la forme d'une turbine. Bien entendu, à la place d'une turbine, on pourrait utiliser un ventilateur de type axial, l'axe de rotation du ventilateur étant alors sensiblement confondu avec l'axe X du cylindre.

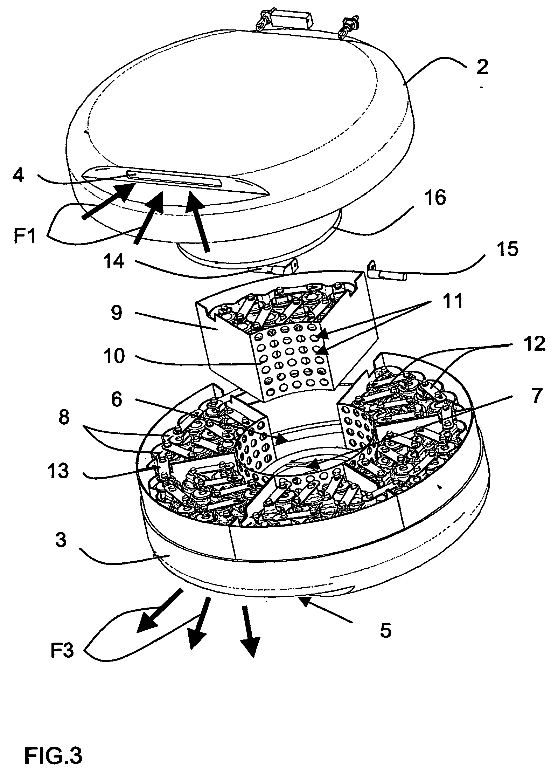

Autour de cette partie centrale 6, et par conséquent autour de la turbine 7, se trouvent installés des éléments électrochimiques secondaires 8, ou accumulateurs, par exemple de type nickel / métal-hydrure (Ni/MH), nickel / cadmium (Ni/Cd), lithium / ion (Li/Ion), ou analogue. Dans l'exemple illustré sur les figures 2 et 3, ces éléments 8 présentent une forme cylindrique circulaire et sont implantés dans des compartiments 9 (ou paniers), configurés en fraction d'anneau (ou de forme partiellement annulaire), et entourant la partie centrale 6. Ces paniers 9 sont délimités par des parois latérales dont l'une au moins (celle (10) qui se trouve placée en regard de la partie centrale 6) comporte des ouvertures 11 permettant le passage du flux d'air de l'intérieur du panier 9 vers la partie centrale 6 où se trouve implantée la turbine 7. La partie arrière du panier et/ou l'une au moins des parties supérieure et inférieure peuvent également comporter des ouvertures pour faciliter le passage d'air.

Bien entendu, on pourrait également prévoir des ouvertures 11 dans les parois latérales des paniers 9 afin de permettre le passage du flux d'air d'un panier 9 à l'autre.

La forme cylindrique circulaire des éléments 8 est ici préférée dans la mesure où elle permet d'optimiser l'occupation de l'espace disponible dans les paniers 9.

Dans l'exemple illustré, particulièrement bien adapté à l'espace qui était auparavant réservé à la roue de secours, le boîtier 1 loge six paniers 9 dans chacun desquels sont installés douze éléments 8. Les connexions entre les éléments 8 d'un même panier 9 et entre éléments de paniers voisins dépendent des caractéristiques électriques requises. Par exemple, comme illustré sur la figure 3, les éléments 8 d'un panier 9 peuvent être montés en série à l'aide de barrettes conductrices 12 reliant le pôle positif de l'un au pôle négatif de l'autre, et les paniers 9 peuvent être montés en série également à l'aide de barrettes conductrices 13 reliant le pôle positif (ou négatif) du dernier élément 8 d'un panier 9 au pôle négatif (ou positif) du premier élément 8 du panier 9 voisin. Dans cet exemple, les paniers 9, montés en série, définissent une branche pouvant délivrer à ses bornes de raccordement 14 et 15 une tension d'environ 42 V (Volts), par exemple.

De nombreuses autres configurations peuvent être envisagées. Par exemple, toujours avec six paniers 9, on peut constituer deux branches parallèles de trois paniers montés en série (et dont les éléments 8 sont également montés en série), de manière à délivrer une puissance électrique plus importante, typiquement de l'ordre de 22 kW (kiloWatts). On peut également constituer des paniers 9 dans lesquels les éléments 8 sont, par exemple, regroupés par paire, les pôles positifs (ou négatifs) des éléments de chaque paire étant couplés par une barrette conductrice 12 et les pôles négatifs (ou positifs) des ces éléments étant chacun couplé au pôle négatif (ou positif) d'un élément d'une autre paire par une barrette conductrice 12.

On peut également monter plusieurs formats d'éléments pour couvrir toute une gamme de puissances

Bien entendu, le nombre de paniers 9, le nombre d'éléments 8 dans chaque panier, les dimensions des éléments et les dimensions du boîtier 1 sont fonction des caractéristiques électriques requises et du volume disponible.

Le boîtier 1 loge également un module de contrôle 16, de préférence de forme sensiblement circulaire ou (tron)conique de manière à obstruer la partie supérieure de la partie centrale 6 du boîtier et contraindre le flux d'air à se diriger au travers des éléments 8 (dans les paniers 9) pour les refroidir, puis vers le système de ventilation pour être expulsé hors de la batterie. Ce module 16 est destiné à gérer le fonctionnement de la batterie. Plus précisément, il gère de préférence les températures batterie, les autorisations de délivrer de la puissance électrique, la recharge de la batterie, ainsi qu'également la puissance de la turbine 7, laquelle permet de contrôler l'aérothermie dans le boîtier 1.

L'assemblage de la batterie précédemment décrite est particulièrement simple. On procède tout d'abord au raccordement des éléments 8 de chaque panier 9 à l'aide de barrettes conductrices 12, pour constituer des groupes d'éléments (comportant, par exemple, douze éléments), puis on place chaque groupe d'élément 8 dans un panier 9. On loge ensuite les paniers 9 dans la coque inférieure 3 à la périphérie de la partie centrale 6, après avoir installé la turbine 7 dans ladite partie centrale 6. Puis, on raccorde les éléments 8 soit aux éléments des paniers 9 voisins, à l'aide de barrettes conductrices 13, soit aux bornes de connexion 14 et 15 de la batterie, et l'on positionne le module de contrôle 16 au dessus de la partie centrale 6. Il ne reste plus alors qu'à placer la coque supérieure 2 au dessus de la coque inférieure 3, puis à les solidariser l'une à l'autre, par exemple à l'aide de moyens de fixation de type boulon/écrou ou anneau de serrage, ou encore de moyens à coopération de formes ou de clips.

Une fois la batterie assemblée, l'air extérieur est aspiré par la turbine 7, par l'ouverture d'alimentation 4 (comme illustré par les flèches F1 de la figure 3), circule dans les différents paniers 9, en balayant de façon sensiblement homogène les différents éléments 8, et débouche dans la partie centrale 6 par les ouvertures 11 (comme illustré par les flèches F2 de la figure 2), puis est finalement expulsé du boîtier 1 par la turbine 7, par l'ouverture d'évacuation 5 de la coque inférieure 3 (comme illustré par les flèches F3 de la figure 3).

Afin de permettre une bonne répartition du flux d'air dans les différents paniers 9, la coque supérieure 2 et/ou le module de contrôle 16 peuvent comporter des nervures profilées de guidage.

En raison de sa forme cylindrique circulaire, la batterie qui vient d'être décrite est particulièrement bien adaptée aux véhicules automobiles, et notamment aux espaces anciennement occupés par les roues de secours. Bien entendu, d'autres formes, notamment de révolution, peuvent être envisagées, comme par exemple des cônes. Cette forme de révolution assure à la batterie une adaptabilité à de nombreuses configurations, tant en matière de positionnement des ouvertures d'alimentation et d'évacuation d'air qu'en matière d'interface de connexion.

L'invention offre donc une batterie dont l'architecture originale permet une grande adaptabilité, tant en matière de caractéristiques électriques que d'encombrement, et de surcroît permet un contrôle précis de l'aérothermie à l'intérieur du boîtier et donc une régulation efficace et homogène de la température des éléments électrochimiques.

L'invention ne se limite pas aux modes de réalisation décrits ci-avant, seulement à titre d'exemple, mais elle englobe toutes les variantes que pourra envisager l'homme de l'art dans le cadre des revendications ci-après.

Ainsi, on a décrit un boîtier comportant une ouverture d'alimentation et une ouverture d'évacuation. Mais, on peut envisager que le boîtier comporte plusieurs ouvertures d'alimentation et/ou plusieurs ouvertures d'évacuation.

Par ailleurs, on a décrit, en référence aux figures, un boîtier en forme de cylindre de révolution (cylindre circulaire). Mais, le boîtier peut présenter toute autre forme dès lors qu'elle permet de définir une partie centrale, dans laquelle sont implantés les moyens de ventilation, et une partie périphérique, entourant la partie centrale et dans laquelle sont implantés les éléments de batterie. Par conséquent, les parois du boîtier pourront présenter une ou plusieurs excroissances, par exemple radiales, pour loger des composants additionnels et/ou d'autres éléments de batterie.

En outre, on a décrit, en référence aux figures, des éléments en forme de cylindre de révolution (cylindre circulaire). Mais, les éléments peuvent présenter toute autre forme dès lors que cette forme permet sensiblement d'optimiser l'espace disponible dans le boîtier à la périphérie des moyens de ventilation.

De par leur mode d'assemblage, les éléments peuvent aisément être remplacés par des éléments d'une autre hauteur ou même d'un autre format. On peut ainsi obtenir des batteries de puissances différentes.

Par ailleurs, on a décrit un générateur délivrant une unique puissance. Mais, le générateur pourrait intégrer au moins deux groupes d'éléments indépendants délivrant en parallèle des puissances identiques ou différentes. Par exemple, le boîtier pourrait comporter, à la périphérie des moyens de ventilation, 3 paniers, par exemple, montés en série de manière à délivrer une première puissance sous une première tension, et trois autres paniers, par exemple, également montés en série de manière à délivrer une seconde puissance (identique à, ou différente de, la première) sous une seconde tension (identique à, ou différente de, la première).

## Revendications

1. Générateur électrochimique, comprenant un boîtier (1) logeant des éléments électrochimiques secondaires (8), agencés de manière à délivrer des caractéristiques électriques choisies, et des moyens de ventilation (7) propres à délivrer un flux d'air dans ledit boîtier (1), ledit boîtier (1) comportant au moins une ouverture d'alimentation en air (4) et une ouverture d'évacuation d'air (5), **caractérisé en ce que** ledit boîtier (1) présente une surface de révolution autour d'un axe de révolution (X), **en ce que** lesdits moyens de ventilation (7) sont logés dans une partie centrale (6) dudit boîtier (1) sensiblement suivant ledit axe de révolution (X), **en ce que** lesdits éléments (8) sont logés dans ledit boîtier (1) à la périphérie desdits moyens de ventilation (7) de manière à être balayés par le flux d'air qu'ils génèrent entre lesdites ouvertures d'alimentation (4) et d'évacuation (5) et **en ce que** ledit boîtier (1) comporte au moins deux compartiments (9) en partie annulaire délimités par des parois latérales dont l'une au moins comprend des ouvertures (11) permettant l'accès du flux d'air dans ladite partie centrale (6), et dans lesquels sont placés lesdits éléments (8).

2. Générateur selon la revendication 1, **caractérisé en ce que** ledit boîtier (1) est de forme sensiblement cylindrique circulaire.

3. Générateur selon l'une des revendications 1 et 2, **caractérisé en ce que** lesdits éléments (8) sont de forme sensiblement cylindrique circulaire.

4. Générateur selon l'une des revendications précédentes, **caractérisé en ce que** lesdits éléments (8) sont des accumulateurs choisis dans un groupe comprenant au moins les accumulateurs nickel / métal-hydrure, les accumulateurs nickel / cadmium (Ni/Cd) et les accumulateurs lithium / ion (Li/Ion).

5. Générateur selon l'une des revendications précédentes, **caractérisé en ce que** ledit boîtier (1) comprend une première (2) et une seconde (3) coques propres à être assemblées pour loger lesdits éléments (8) et moyens de ventilation (7), lesdites première (2) et seconde (3) coques comprenant respectivement lesdites ouvertures d'alimentation (4) et d'évacuation (5).

6. Générateur selon l'une des revendications précédentes, **caractérisé en ce que** lesdits moyens de ventilation (7) sont choisis dans un groupe comprenant au moins les turbines et les ventilateurs axiaux.

7. Utilisation du générateur selon l'une des revendications précédentes, dans le domaine des véhicules automobiles.

8. Utilisation selon la revendication 7, dans un emplacement du véhicule automobile, anciennement occupé par la roue de secours.

## Patentansprüche

1. Elektrochemischer Generator, umfassend:
- ein Gehäuse (1), in dem die sekundären elektrochemischen Elemente (8) untergebracht sind, die derart angeordnet sind, um die gewählten elektrischen Eigenschaften bereitzustellen,
- und Lüftungsmittel (7), die geeignet sind, einen Luftstrom in das Gehäuse (1) einzuleiten, wobei das Gehäuse (1) mindestens eine Zuluftöffnung (4) und eine Abluftöffnung (5) aufweist,
**dadurch gekennzeichnet**,
✔ dass das Gehäuse (1) eine Rotationsfläche um eine Rotationsachse (X) aufweist,
✔ dass die Lüftungsmittel (7) in einem mittleren Teil (6) des Gehäuses (1) im Wesentlichen entlang der Rotationsachse (X) untergebracht sind,
✔ dass die Elemente (8) in dem Gehäuse (1) am Rand der Lüftungsmittel (7) derart untergebracht sind, um von dem Luftstrom, den sie zwischen der Zuluftöffnung (4) und der Abluftöffnung (5) erzeugen, umströmt zu werden, und
✔ dass das Gehäuse (1) mindestens zwei Abteilungen (9) im ringförmigen Teil aufweist, die durch Seitenwände begrenzt sind, wovon mindestens eine Öffnungen (11) aufweist, die den Zugang des Luftstroms in den mittleren Teil (6) ermöglichen, und in denen die Elemente (8) angeordnet sind.

2. Generator nach Anspruch 1, **dadurch gekennzeichnet, dass** das Gehäuse (1) von im Wesentlichen kreiszylinderförmiger Form ist.

3. Generator nach einem der Ansprüche 1 und 2, **dadurch gekennzeichnet, dass** die Elemente (8) von im Wesentlichen kreiszylinderförmiger Form sind.

4. Generator nach einem der vorhergehenden Ansprüche, **dadurch gekennzeichnet, dass** die Elemente (8) Akkumulatoren sind, die aus einer Gruppe ausgewählt sind, die mindestens die Nickel-Metallhydrid-Akkumulatoren, die Nickel-Cadmium-Akkumulatoren (Ni/Cd) und die Lithium-Ionen-Akkumulatoren (Li/lon) aufweist.

5. Generator nach einem der vorhergehenden Ansprüche, **dadurch gekennzeichnet, dass** das Gehäuse (1) eine erste (2) und eine zweite (3) Schale aufweist, die geeignet sind, zusammengebaut zu werden, um die Elemente (8) und die Lüftungsmittel (7) aufzunehmen, wobei die erste (2) und zweite (3) Schale jeweils die Zuluftöffnung (4) und die Abluftöffnung (5) aufweisen.

6. Generator nach einem der vorhergehenden Ansprüche, **dadurch gekennzeichnet, dass** die Lüftungsmittel (7) aus einer Gruppe ausgewählt sind, die mindestens die Axialturbinen und die Axialventilatoren aufweist.

7. Verwendung des Generators nach einem der vorhergehenden Ansprüche in dem Bereich der Kraftfahrzeuge.

8. Verwendung nach Anspruch 7 an einer Stelle des Kraftfahrzeugs, die früher von dem Ersatzrad eingenommen wurde.

## Claims

1. An electrochemical battery comprising a casing (1) housing secondary electrochemical cells (8) arranged to deliver selected electrical characteristics, and fan means (7) suitable for delivering a flow of air in said casing (1), said casing (1) having at least one air inlet opening (4) and at least one air outlet opening (5), the battery being **characterized in that** said casing (1) presents a surface of revolution around an axis of revolution (X), **in that** said fan means (7) are received in a central portion (6) of said casing (1) substantially on said axis of revolution (X), and **in that** said cells (8) are housed in said casing (1) around the periphery of said fan means (7) in such a manner as to be swept by the flow of air the fan means generate between said air inlet and outlet openings (4, 5), and **in that** said casing (1) has at least two part-annular compartments (9) defined by lateral walls, of which at least one has openings (11) giving the flow of air access to said central portion (6), said compartments receiving said cells (8).

2. A battery according to claim 1, **characterized in that** said casing (1) is substantially in the form of a circular cylinder.

3. A battery according to claim 1 or claim 2, **characterized in that** said cells (8) are substantially in the form of circular cylinders.

4. A battery according to any one of the preceding claims, **characterized in that** said cells (8) are secondary cells selected from the group comprising at least: nickel metal hydride cells, nickel cadmium cells (Ni/Cd) and lithium ion cells (Li/Ion).

5. A battery according to any one of the preceding claims, **characterized in that** said casing (1) comprises first and second shells (2, 3) suitable for being assembled together to receive said cells (8) and fan means (7), said first and second shells (2, 3) respectively including said air inlet and said air outlet openings (4, 5).

6. A battery according to any one of the preceding claims, **characterized in that** said fan means (7) are selected from the group comprising at least axial fans and centrifugal blowers.

7. The use of a battery according to any one of the preceding claims, in the motor vehicle field.

8. A use according to claim 7, in a location in a motor vehicle previously occupied by a spare wheel.
